(19) **Europäisches Patentamt** / **European Patent Office** / **Office européen des brevets**

(11) **EP 3 294 631 B1**

(12) **FASCICULE DE BREVET EUROPEEN**

(45) Date de publication et mention
de la délivrance du brevet:
**13.03.2019 Bulletin 2019/11**

(21) Numéro de dépôt: **16727761.5**

(22) Date de dépôt: **12.05.2016**

(51) Int Cl.:
*B64G 1/26* (2006.01)       *B64G 1/52* (2006.01)
*B64G 1/24* (2006.01)       *B64G 1/28* (2006.01)
*B64G 1/32* (2006.01)       *B64G 1/36* (2006.01)

(86) Numéro de dépôt international:
**PCT/FR2016/051117**

(87) Numéro de publication internationale:
**WO 2016/181079 (17.11.2016 Gazette 2016/46)**

(54) **PROCÉDÉ ET SYSTÈME DE DÉTECTION DE PANNE D'UN BRAS DE PROPULSION D'UN ENGIN SPATIAL, TEL QU'UN SATELLITE**

VERFAHREN UND SYSTEM ZUR DETEKTION EINES AUSFALLS IN EINEM ANTRIEBSARM EINES RAUMFAHRZEUGS WIE ETWA EINES SATELLITEN

METHOD AND SYSTEM FOR DETECTING A BREAKDOWN IN A PROPULSION ARM OF A SPACECRAFT SUCH AS A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2015 FR 1554236**

(43) Date de publication de la demande:
**21.03.2018 Bulletin 2018/12**

(73) Titulaires:
• **Airbus Defence and Space SAS**
  **31402 Toulouse Cedex 4 (FR)**
• **Centre National d'Etudes Spatiales (CNES)**
  **75001 Paris (FR)**

(72) Inventeurs:
• **CAPOLUPO, Francesco**
  **31402 Toulouse Cedex 4 (FR)**
• **FALCOZ, Alexandre**
  **31402 Toulouse Cedex 4 (FR)**

(74) Mandataire: **Ipside**
  **6, Impasse Michel Labrousse**
  **31100 Toulouse (FR)**

(56) Documents cités:
**EP-A2- 2 660 154      WO-A1-2015/028588**

• **ALEXANDRE FALCOZ ET AL: "Robust H/H thruster failure detection and isolation with application to the LISA Pathfinder spacecraft", AIAA GUIDANCE, NAVIGATION, AND CONTROL CONFERENCE, 2 août 2010 (2010-08-02), XP055265379, Reston, Virigina DOI: 10.2514/6.2010-7906 ISBN: 978-1-60086-962-4**

EP 3 294 631 B1

## Description

### DOMAINE TECHNIQUE

La présente invention appartient au domaine du contrôle d'attitude et d'orbite d'engins spatiaux, tels que des satellites. Plus particulièrement, la présente invention concerne la détection et l'isolation de panne dans un système de contrôle d'attitude et d'orbite d'un engin spatial comportant un bras articulé portant un propulseur, dit « bras de propulsion ».

### ÉTAT DE LA TECHNIQUE

De manière connue, un engin spatial, tel qu'un satellite, comporte un système de contrôle d'attitude et d'orbite mis en oeuvre notamment pour effectuer la mise à poste dudit satellite sur son orbite de mission (par exemple pour effectuer un transfert d'une orbite GTO vers une orbite GEO) et pour contrôler l'attitude et la position dudit satellite sur son orbite de mission.

De tels systèmes comportent notamment des propulseurs, chimiques et/ou électriques, dont les directions de poussée sont généralement orientables. Par exemple, dans le cas d'un contrôle d'orbite d'un satellite préalablement mis à poste sur son orbite de mission, l'orientation d'un propulseur peut être contrôlée de sorte à aligner sensiblement la direction de poussée avec le centre de masse du satellite, afin d'éviter de former un couple perturbateur. Suivant un autre exemple, dans le cas où un dispositif de stockage de moment cinétique, tel qu'un ensemble de volants d'inertie (roues de réactions, actionneurs gyroscopiques, etc.), doit être dé-saturé, l'orientation d'un propulseur peut être contrôlée de sorte à délibérément désaligner la direction de poussée avec le centre de masse du satellite, afin de former un couple adapté à dé-saturer ledit dispositif de stockage de moment cinétique.

De nos jours, il est envisagé de monter certains propulseurs sur des bras articulés, dit « bras de propulsion » (voir par exemple la demande de brevet européen EP 2660154 A2). Un bras de propulsion comporte une extrémité de liaison, fixée à un corps du satellite, et une extrémité de propulsion, opposée à l'extrémité de liaison, portant un propulseur. Entre l'extrémité de liaison et l'extrémité de propulsion, le bras de propulsion comporte une ou plusieurs articulations, comportant chacune au moins un degré de liberté en rotation. Dans le cas de plusieurs articulations, elles sont séparées par un élément de liaison.

La mise en oeuvre d'un bras articulé est avantageuse pour plusieurs raisons. Tout d'abord, étant donné que le propulseur peut être placé à distance du satellite, le bras de levier est augmenté et il est possible de former des couples plus importants, par exemple pour dé-saturer le dispositif de stockage de moment cinétique. En outre, la direction de poussée du propulseur, par rapport au centre de masse du satellite, peut être contrôlée avec une plus grande précision, par exemple pour éviter de former un couple perturbateur lors des opérations de contrôle d'orbite. Egalement, il peut être avantageux d'actionner les propulseurs à distance du corps du satellite pour éviter que ceux-ci n'interfèrent avec d'autres équipements du satellite (générateurs solaires, antennes, etc.).

Par contre, l'utilisation de tels bras de propulsion, comportant plusieurs articulations, augmente le nombre d'équipements susceptibles de subir une panne. L'utilisation de tels bras de propulsion rend donc plus difficile la détection de pannes des articulations ainsi que leur isolation (c'est-à-dire l'identification de l'articulation qui présente une panne), sauf à prévoir un capteur dédié au niveau de chaque articulation de chaque bras de propulsion.

### EXPOSÉ DE L'INVENTION

La présente invention a pour objectif de remédier à tout ou partie des limitations des solutions de l'art antérieur, notamment celles exposées ci-avant, en proposant une solution qui permette de détecter et d'isoler des pannes d'un bras de propulsion tout en limitant le nombre de capteurs nécessaires pour le faire, voire en utilisant uniquement des capteurs préexistants.

A cet effet, et selon un premier aspect, l'invention concerne un procédé de détection de panne d'un système de contrôle d'attitude et d'orbite d'un engin spatial, ledit système comportant au moins un bras de propulsion, ledit bras de propulsion comportant au moins un propulseur et au moins une articulation, ledit bras de propulsion étant adapté à former un couple qui est relié à un état du bras de propulsion, ledit état du bras de propulsion correspondant à la position angulaire de ladite articulation et à la norme de la force de poussée dudit propulseur, par une fonction de formation de couple. Ledit procédé de détection de panne comporte :

- le calcul, en fonction du gradient de la fonction de formation de couple calculé pour un état de référence du bras de propulsion pour une opération de contrôle, d'un espace associé à l'articulation du bras de propulsion, dit « espace d'isolation de panne », dans lequel un couple parasite est formé par une panne de ladite articulation,
- l'estimation, au cours de ladite opération de contrôle, d'une vitesse de rotation de l'engin spatial,

- l'estimation d'un résidu de moment cinétique en fonction de la vitesse de rotation dudit engin spatial,
- le calcul d'un résidu articulaire, associé à l'articulation du bras de propulsion, par projection du résidu de moment cinétique sur l'espace d'isolation de panne,
- la recherche d'une panne d'articulation en fonction du résidu articulaire, une panne d'articulation étant détectée si ledit résidu articulaire vérifie un critère prédéfini de détection de panne d'articulation.

Ainsi, le procédé de détection de panne utilise principalement une estimation de la vitesse de rotation de l'engin spatial sur lui-même. La vitesse de rotation de l'engin spatial peut être estimée à partir de mesures fournies par des capteurs (gyroscopes, accéléromètres, etc.) qui sont généralement déjà présents dans les systèmes de contrôle d'attitude et d'orbite d'engins spatiaux, notamment pour effectuer le contrôle d'attitude, et qui n'ont en outre pas à être placés sur le bras de propulsion.

A partir de la vitesse de rotation de l'engin spatial, il est possible d'estimer le moment cinétique réel de l'engin spatial, et également d'estimer le résidu de moment cinétique, c'est-à-dire la différence entre le moment cinétique réel dudit engin spatial et un moment cinétique théorique que ledit engin spatial devrait avoir compte tenu notamment des couples formés par le système de contrôle d'attitude et d'orbite dudit engin spatial.

En outre, pour effectuer l'opération de contrôle considérée, le bras de propulsion est placé dans un état de référence, autour duquel les variations de la position angulaire de l'articulation sont en principe d'amplitude peu élevée pendant la durée de l'opération de contrôle considérée. Par conséquent, la fonction de formation de couple du bras de propulsion, qui est par nature non-linéaire, peut être linéarisée autour de cet état de référence en calculant le gradient de ladite fonction de formation de couple pour ledit état de référence.

Ce modèle linéaire permet de mieux appréhender les effets d'une panne articulaire. En effet, le gradient calculé comporte la dérivée partielle de la fonction de formation de couple par rapport à la position angulaire de ladite articulation. La dérivée partielle de ladite fonction de formation de couple par rapport à la position angulaire de l'articulation est représentative de la direction du couple parasite formé par une erreur sur la position angulaire de cette articulation, et permet donc de calculer un espace d'isolation de panne dans lequel un couple parasite est formé principalement par une panne de ladite articulation. Par conséquent, le résidu articulaire, obtenu par projection du résidu de moment cinétique sur l'espace d'isolation de panne, permet de détecter une panne de l'articulation.

Dans des modes particuliers de mise en oeuvre, le procédé de détection de panne peut comporter en outre l'une ou plusieurs des caractéristiques suivantes, prises isolément ou selon toutes les combinaisons techniquement possibles.

Dans des modes particuliers de mise en oeuvre, le bras de propulsion comportant au moins deux articulations, ledit procédé comporte :

- le calcul d'espaces d'isolation de panne associés respectivement aux différentes articulations du bras de propulsion,
- le calcul de résidus articulaires associés respectivement aux différentes articulations du bras de propulsion,
- la recherche d'une panne d'articulation en fonction desdits résidus articulaires, une panne d'articulation étant détectée si lesdits résidus articulaires vérifient un critère prédéfini de détection de panne d'articulation.

Ainsi, si le bras de propulsion comporte plusieurs articulations, on calcule un espace d'isolation de panne pour chaque articulation, en fonction du gradient de la fonction de formation de couple calculé pour l'état de référence. Le gradient calculé comporte notamment les dérivées partielles de la fonction de formation de couple par rapport aux positions angulaires des différentes articulations. La dérivée partielle de ladite fonction de formation de couple par rapport à la position angulaire d'une articulation est représentative de la direction du couple parasite formé par une erreur sur la position angulaire de cette articulation, et définit par conséquent un plan, orthogonal à ladite direction du couple parasite, dans lequel une erreur sur la position angulaire de cette articulation ne produit a contrario aucun couple perturbateur. Par conséquent, dans ce plan, seules des pannes des autres articulations du bras de propulsion sont susceptibles de former un couple parasite. Ainsi, les dérivées partielles permettent de calculer, pour chaque articulation, un espace d'isolation de panne dans lequel un couple parasite est formé principalement par une panne de ladite articulation. Par exemple, dans le cas de trois articulations, l'intersection des plans orthogonaux aux dérivées partielles associées à deux desdites articulations, qui correspond à une direction orthogonale au plan défini par lesdites deux dérivées partielles, définit un espace d'isolation de panne pour la troisième articulation, dans la mesure où seule une panne de cette troisième articulation est susceptible de former un couple perturbateur suivant cette direction.

Dans des modes particuliers de mise en oeuvre, le critère de détection de panne d'articulation est vérifié, pour une articulation du bras de propulsion, lorsque le résidu articulaire associé à ladite articulation est au moins cinq fois supérieur, en valeur absolue, au résidu articulaire associé à chaque autre articulation du bras de propulsion.

Dans des modes particuliers de mise en oeuvre, le procédé de détection de panne comporte le calcul d'un résidu de propulsion, associé au propulseur, en fonction de la norme du résidu de moment cinétique, et la recherche d'une panne de propulseur en fonction du résidu de propulsion, une panne de propulseur étant détectée si le résidu de propulsion vérifie un critère prédéfini de détection de panne de propulseur.

Dans un tel cas, le procédé de détection de panne permet donc de détecter et d'isoler les pannes d'articulations et de propulseur, l'isolation étant toutefois possible seulement lorsqu'un seul équipement (articulation ou propulseur) présente une panne.

Dans des modes particuliers de mise en oeuvre, la recherche de panne d'articulation n'est effectuée que si aucune panne de propulseur n'est détectée.

Dans des modes particuliers de mise en oeuvre, le critère de détection de panne de propulseur est vérifié lorsque le résidu de propulsion est supérieur, en valeur absolue, à une valeur seuil positive prédéfinie.

Dans des modes particuliers de mise en oeuvre, le procédé de détection de panne comporte, lorsqu'une panne de propulseur est détectée, l'estimation, en fonction du résidu de propulsion, d'une erreur sur la norme de la force de poussée induite par ladite panne de propulseur.

Dans des modes particuliers de mise en oeuvre, l'opération de contrôle est une opération d'une phase de mise à poste de l'engin spatial sur une orbite de mission.

Dans des modes particuliers de mise en oeuvre, le procédé de détection de panne comporte, lorsqu'une panne d'articulation est détectée, l'estimation, en fonction du résidu articulaire associé à ladite articulation pour laquelle une panne a été détectée, d'une erreur sur la position angulaire de ladite articulation induite par ladite panne d'articulation.

Selon un second aspect, la présente invention concerne un produit programme d'ordinateur comportant un ensemble d'instructions de code de programme qui, lorsqu'elles sont exécutées par un processeur, configurent ledit processeur pour mettre en oeuvre un procédé de détection de panne selon l'un quelconque des modes de mise en oeuvre de l'invention.

Selon un troisième aspect, la présente invention concerne un dispositif de détection de panne d'un système de contrôle d'attitude et d'orbite d'un engin selon la revendication 11.

Selon un quatrième aspect, la présente invention concerne un système de contrôle d'attitude et d'orbite d'un engin spatial, tel qu'un satellite, comportant au moins un bras de propulsion de l'engin spatial, ledit bras de propulsion comportant au moins un propulseur et au moins une articulation, et un dispositif de détection de panne selon l'un quelconque des modes de réalisation de l'invention.

Dans des modes particuliers de réalisation, le système de contrôle d'attitude et d'orbite peut comporter en outre l'une ou plusieurs des caractéristiques suivantes, prises isolément ou selon toutes les combinaisons techniquement possibles.

Dans des modes particuliers de réalisation, le propulseur est un propulseur électrique.

Dans des modes particuliers de réalisation, le bras de propulsion comporte au moins deux propulseurs.

Dans des modes particuliers de réalisation, le système de contrôle d'attitude et d'orbite comporte au moins deux bras de propulsion.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un satellite comportant deux bras de propulsion,
- Figure 2 : un diagramme représentant les principales étapes d'un exemple de mise en oeuvre d'un procédé de détection de panne,
- Figure 3 : des courbes représentant le comportement de résidus articulaires en présence d'une panne d'articulation,
- Figure 4 : un diagramme représentant les principales étapes d'un mode préféré de mise en oeuvre d'un procédé de détection de panne.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

La présente invention concerne la détection de panne au niveau d'un bras de propulsion d'un engin spatial 10, le bras de propulsion étant mis en oeuvre par un système de contrôle d'attitude et d'orbite dudit engin spatial.

Dans la suite de la description, on se place de manière non limitative dans le cas d'un satellite 10 destiné à être mis à poste, pour les besoins de sa mission, sur une orbite GEO. Rien n'exclut cependant, suivant d'autres exemples, de considérer d'autres types d'engins spatiaux (navette spatiale, station orbitale, etc.), et/ou d'autres orbites terrestres, par exemple des orbites géosynchrones, des orbites moyennes (« Medium Earth Orbit » ou MEO), des orbites basses (« Low Earth Orbit » ou LEO), etc.

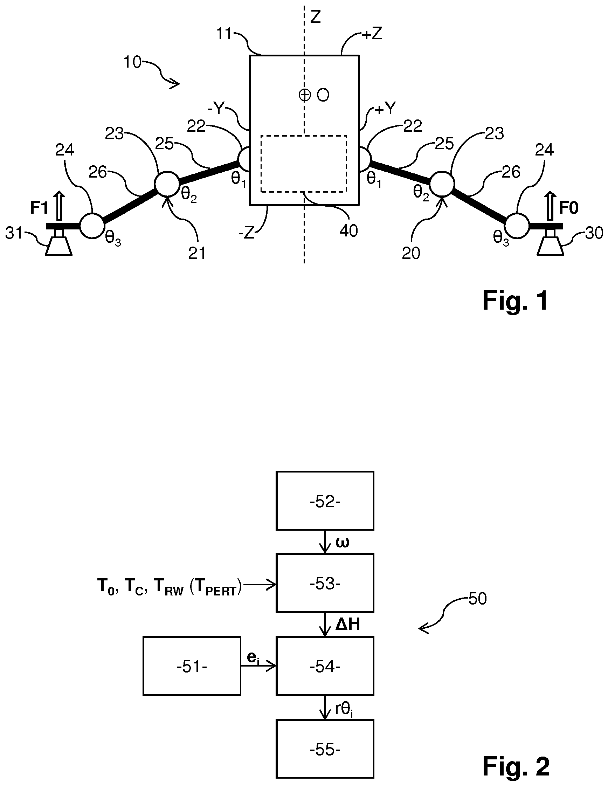

La figure 1 représente schématiquement un exemple non limitatif de réalisation d'un satellite 10 comportant deux bras de propulsion 20, 21 fixés à un corps 11 dudit satellite 10. Dans la suite de la description, on se place de manière non limitative dans le cas où le corps 11 du satellite 10 est sensiblement en forme de parallélépipède rectangle, c'est-à-dire qu'il comporte six faces deux à deux parallèles, et dans le cas où l'attitude du satellite 10 à poste en orbite GEO est contrôlée, pour les besoins de la mission dudit satellite 10, de sorte à être placé dans une attitude de consigne, dite «attitude de mission », dans laquelle :

- une face du corps 11 du satellite 10, désignée par « face +Z », portant par exemple un instrument d'une charge utile dudit satellite 10, est dirigée vers la Terre ; la face opposée à la face +Z, agencée du côté opposé à la Terre, est désignée par « face -Z » ;
- deux faces opposées du corps 11 du satellite 10, désignées par respectivement « face +Y » et « face -Y », sont sensiblement parallèles au plan de l'orbite GEO,
- les deux dernières faces opposées du corps 11 du satellite 10, non représentées sur les figures et désignées par respectivement « face +X » et « face -X », sont sensiblement orthogonales à un vecteur vitesse du satellite 10 en orbite GEO.

Tel qu'illustré par la figure 1, les deux bras de propulsion 20, 21 sont fixés respectivement à la face +Y et la face -Y du satellite 10. Rien n'exclut cependant, suivant d'autres exemples, de considérer d'autres positions l'un et/ou l'autre desdits bras de propulsion 20, 21.

Dans l'exemple illustré par la figure 1, chaque bras de propulsion 20, 21 comporte un propulseur 30, 31. Dans la suite de la description, on se place dans le cas où les propulseurs 30, 31 sont des propulseurs électriques (électrothermique, électrostatique, plasma, etc.). Rien n'exclut cependant, suivant d'autres exemples, que l'un ou les deux propulseurs 30, 31 soient des propulseurs chimiques (gaz froid, ergols liquides, etc.).

En outre, chaque bras de propulsion 20, 21 comporte, dans l'exemple non limitatif illustré par la figure 1, trois articulations 22, 23, 24, chaque articulation comportant un degré de liberté en rotation autour d'un axe de rotation. Les articulations 22 et 23 sont reliées entre elles par une liaison 25, tandis que les articulations 23 et 24 sont reliées entre elles par une liaison 26. Dans des modes préférés de réalisation, pour chaque bras articulé 20, 21, les axes de rotation respectifs d'articulations 22, 23, 24 adjacentes ne sont pas parallèles pour chacune des deux paires d'articulations adjacentes.

Ainsi, dans l'exemple non limitatif illustré par la figure 1, chaque bras de propulsion 20, 21 offre trois degrés de liberté pour modifier la direction de poussée et le point d'application de la force de poussée du propulseur 30, 31. Les articulations 22, 23, 24 permettent de modifier la direction de poussée et le point d'application de la force de poussée du propulseur 30, 31 par rapport à un centre de masse O du satellite 10.

Par conséquent, chaque bras de propulsion 20, 21 est adapté à former un couple qui varie en fonction de l'état dudit bras de propulsion, c'est-à-dire en fonction des positions angulaires des articulations 22, 23, 24, désignés respectivement par $\theta_1$, $\theta_2$ et $\theta_3$, et en fonction de la norme F de la force de poussée dudit propulseur 30, 31. Le couple formé par chaque bras de propulsion 20, 21 est relié à l'état dudit bras de propulsion 20, 21 par une fonction de formation de couple prédéfinie.

Pour les besoins du contrôle d'attitude, le satellite 10 peut comporter également un ou plusieurs actionneurs (non représentés sur les figures), tels que des roues de réaction, des actionneurs gyroscopiques, des magnéto-coupleurs, etc., adaptés à former des couples de contrôle d'attitude dudit satellite 10. Dans la suite de la description, on se place de manière non limitative dans le cas où le satellite 10 comporte au moins trois roues de réaction d'axes de rotation respectifs linéairement indépendants, qui peuvent en outre être mises en oeuvre en tant que dispositif de stockage de moment cinétique. L'invention est cependant applicable à tout type d'actionneur permettant de former un couple de contrôle d'attitude dudit satellite 10.

Le système de contrôle d'attitude et d'orbite du satellite 10 comporte également un dispositif de commande (non représenté sur les figures) qui contrôle les articulations 22, 23, 24 et les propulseurs 30,31 des bras de propulsion 20, 21, ainsi que les roues de réaction du satellite 10, en fonction de mesures effectuées par divers capteurs. Par exemple, le satellite 10 peut comporter un senseur stellaire (« startracker » dans la littérature anglo-saxonne) pour mesurer l'attitude dudit satellite 10, un ou plusieurs gyroscopes pour mesurer la vitesse de rotation dudit satellite 10 sur lui-même, des tachymètres pour mesurer les vitesses de rotation respectives des roues de réaction du satellite 10, etc.

Le système de contrôle d'attitude et d'orbite du satellite 10 comporte également un dispositif 40 de détection de panne des bras de propulsion 20, 21. Dans l'exemple illustré par la figure 1, le dispositif 40 de détection de panne est embarqué dans le satellite 10. Rien n'exclut cependant, suivant d'autres exemples, d'avoir le dispositif 40 de détection de panne intégré dans une station sol, ou encore distribué entre le satellite 10 et une station sol.

Le dispositif 40 de détection de panne comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes d'un procédé 50 de détection de panne, qui sera décrit ci-après. Dans une variante, le dispositif 40 de détection de panne comporte un ou des circuits logiques programmables, de type FPGA, PLD, etc., et/ou circuits intégrés spécialisés (ASIC) adaptés à mettre en oeuvre tout ou partie desdites étapes du procédé 50 de détection de panne.

En d'autres termes, le dispositif 40 de détection de panne comporte des moyens configurés de façon logicielle (produit programme d'ordinateur spécifique) et/ou matérielle (FPGA, PLD, ASIC, etc.) pour mettre en oeuvre les différentes étapes du procédé 50 de détection de panne.

La figure 2 représente schématiquement les principales étapes d'un procédé 50 de détection de panne, lesquelles sont :

- 51 calcul d'espaces d'isolation de panne, associés respectivement aux différentes articulations 22, 23, 24 de chaque bras de propulsion 20, 21, en fonction du gradient de la fonction de formation de couple calculé pour un état de référence dudit bras de propulsion 20, 21 pour une opération de contrôle,
- 52 estimation d'une vitesse de rotation du satellite 10 au cours de ladite opération de contrôle,
- 53 estimation d'un résidu de moment cinétique en fonction de la mesure de la vitesse de rotation dudit satellite 10,
- 54 calcul de résidus articulaires, associés respectivement aux différentes articulations 22, 23, 24 de chaque bras de propulsion 20, 21, par projection du résidu de moment cinétique sur les différents espaces d'isolation de panne,
- 55 recherche d'une panne d'articulation en fonction des résidus articulaires, une panne d'articulation étant détectée si lesdits résidus articulaires vérifient un critère prédéfini de détection de panne d'articulation.

Dans l'exemple illustré par la figure 1, les bras de propulsion 20, 21 sont placés dans un état de référence pour une opération de contrôle effectuée au cours d'une phase de transfert du satellite 10 d'une orbite de transfert GTO vers l'orbite GEO de mission dudit satellite 10. L'opération de contrôle réalisée par les bras de propulsion 20, 21 sur la figure 1 correspond par exemple à la manoeuvre d'apogée dudit satellite 10, et l'état de référence desdits bras de propulsion 20, 21 consiste à former des forces de poussée $F_0$ et $F_1$ parallèles à un axe Z orthogonal aux faces +Z et -Z du corps 11 du satellite 10, orientées de la face -Z vers la face +Z. Les points d'application des forces de poussée $F_0$ et $F_1$ sont, dans l'état de référence, tels que les forces de poussée $F_0$ et $F_1$ sont désalignées par rapport au centre de masse O mais forment des couples opposés qui s'annulent. Dans la suite de la description, on désigne par $S_0 = (\theta_0, F_0)$ l'état de référence $S_0$ dans lequel :

- $\theta_0$ correspond au vecteur $(\theta_{0,1}, \theta_{0,2}, \theta_{0,3})$ constitué par les positions angulaires de référence des articulations 22, 23, 24,
- $F_0$ correspond à la norme de référence des forces de poussée $F_0$ et $F_1$ des propulseurs 30, 31.

Pour chaque bras de propulsion 20, 21, le couple $T_{DTMA}$ formé est donné, en fonction de l'état dudit bras de propulsion, par une fonction de formation de couple B du type :

$$\mathbf{T_{DTMA}} = B(\theta_1, \theta_2, \theta_3, F)$$

Au cours de l'opération de contrôle, les variations de la position angulaire de chaque articulation 22, 23, 24 sont en principe d'amplitude peu élevée, et la norme de la force de poussée est, par exemple, constante. Par conséquent, les positions angulaires $\theta_1$, $\theta_2$, $\theta_3$ et la norme F de la force de poussée peuvent s'écrire sous la forme suivante :

$$\theta_i = \theta_{0,i} + \theta_{C,i} + \Delta\theta_i$$

avec i = 1, 2, 3

$$F = F_0 + \Delta F$$

expressions dans lesquelles :

- $\theta_{C,i}$ correspond à la variation commandée autour de la position angulaire de référence $\theta_{0,i}$, de sorte que la position angulaire souhaitée correspond à $\theta_{0,i} + \theta_{C,i}$,
- $\Delta\theta_i$ correspond à une erreur sur la position angulaire $\theta_i$, induite par une éventuelle panne de l'articulation correspondante,

- ΔF correspond à une erreur sur la norme F de la force de poussée.

Par conséquent, la fonction de formation de couple B de chaque bras de propulsion 20, 21, qui est par nature non-linéaire, peut être linéarisée autour de l'état de référence $S_0$ en calculant le gradient de ladite fonction de formation de couple pour ledit état de référence $S_0$ :

$$\mathbf{T_{DTMA}} \approx \mathbf{T_0} + \mathbf{T_C} + \underbrace{\left[\frac{\delta B}{\delta\theta_1} \quad \frac{\delta B}{\delta\theta_2} \quad \frac{\delta B}{\delta\theta_3}\right]_{\mathbf{S_0}} \begin{bmatrix} \Delta\theta_1 \\ \Delta\theta_2 \\ \Delta\theta_3 \end{bmatrix} + \left[\frac{\delta B}{\delta F}\right]_{\mathbf{S_0}} \Delta F}_{\mathbf{\Delta T}}$$

expression dans laquelle :

- $\mathbf{T_0}$ correspond au couple formé pour l'état de référence $\mathbf{S_0}$,
- $\mathbf{T_C}$ correspond au couple ajouté par les variations $\theta_{C,i}$ commandées (i = 1, 2, 3) autour de l'état de référence $\mathbf{S_0}$,
- $\delta B/\delta\theta_1$, $\delta B/\delta\theta_2$ et $\delta B/\delta\theta_3$ correspondent aux dérivées partielles de la fonction de formation de couple par rapport aux positions angulaires respectivement $\theta_1$, $\theta_2$, $\theta_3$,

- $\delta B/F$ correspond à la dérivée partielle de la fonction de formation de couple par rapport à la norme F de la force de poussée,
- $\mathbf{\Delta T}$ correspond au couple perturbateur formé par les erreurs $\Delta\theta_1$, $\Delta\theta_2$, $\Delta\theta_3$ et $\Delta F$.

Le modèle linéaire donné par l'expression ci-dessus permet de mieux appréhender les effets de chaque panne articulaire.

En effet, la dérivée partielle $\delta B/\delta\theta_i$ calculée pour l'état de référence $\mathbf{S_0}$, qui correspond à un vecteur, est représentative de la direction du couple parasite formé par une erreur sur la position angulaire $\theta_i$ (i = 1, 2, 3), et définit par conséquent un plan, orthogonal à ladite direction du couple parasite, dans lequel une erreur sur la position angulaire $\theta_i$ ne produit a contrario aucun couple perturbateur. Par conséquent, dans ce plan, seules des pannes des autres articulations du bras de propulsion sont susceptibles de former un couple parasite. Ainsi, les dérivées partielles permettent de calculer, pour chaque articulation, un espace d'isolation de panne dans lequel un couple parasite est formé principalement par une panne de ladite articulation.

Par exemple, dans le cas où chaque bras de propulsion 20, 21 comporte trois articulations 22, 23, 24, l'espace d'isolation de panne de chaque articulation est un espace vectoriel de dimension un, qui peut être défini par un vecteur $\mathbf{e_i}$ calculé selon l'expression suivante :

$$\mathbf{e_i} = \frac{\left[\frac{\delta B}{\delta\theta_j} \otimes \frac{\delta B}{\delta\theta_k}\right]_{\mathbf{S_0}}}{\left\|\left[\frac{\delta B}{\delta\theta_j} \otimes \frac{\delta B}{\delta\theta_k}\right]_{\mathbf{S_0}}\right\|}$$

expression dans laquelle :

- $i \neq j \neq k \in (1, 2, 3)$,
- $\otimes$ correspond au produit vectoriel.

Par conséquent, pour chaque bras de propulsion 20, 21, l'espace d'isolation de panne $\mathbf{e_i}$ est orthogonal aux dérivées partielles $\delta B/\delta\theta_j$ et $\delta B/\delta\theta_k$ ($i \neq j \neq k$), de sorte que seule une erreur $\Delta\theta_i$ sur la position angulaire $\theta_i$ est susceptible de former un couple perturbateur selon le vecteur $\mathbf{e_i}$, sous réserve toutefois que la dérivée partielle $\delta B/\delta\theta_i$ ne soit pas elle-même orthogonale au vecteur $\mathbf{e_i}$. Par conséquent, le vecteur $\mathbf{e_i}$ permet de détecter et d'isoler une panne de l'articulation associée à la position angulaire $\theta_i$ uniquement si :

$$IS\left(\theta_{0,i}\right) = \mathbf{e}_i^\top \left[ \frac{\delta B}{\delta \theta_i} \right]_{S_0} \neq 0$$

L'expression ci-dessus fournit donc un ensemble de conditions pour que les pannes des différentes articulations puissent être détectées et isolées pour l'état de référence $S_0$. Par conséquent, il est possible de concevoir les bras de propulsion 20, 21 pour que ces conditions soient vérifiées pour un état de référence donné. Il est également possible d'identifier des états de référence, parmi plusieurs états de référence associés à différentes opérations de contrôle, pour lesquels ces conditions sont vérifiées et pour lesquels le procédé 50 de détection de panne selon l'invention peut être mis en oeuvre.

Les espaces d'isolation de panne $\mathbf{e}_i$ sont calculés pour chaque articulation 22 (position angulaire $\theta_1$), 23 (position angulaire $\theta_2$), 24 (position angulaire $\theta_3$) de chaque bras de propulsion 20, 21. On obtient ainsi, dans le cas de deux bras de propulsion 20, 21 comportant chacun trois articulations 22, 23, 24, un total de six espaces d'isolation de panne, désignés par exemple par $\mathbf{e}_{i[+Y]}$ (i = 1, 2, 3) pour le bras de propulsion 20 fixé sur la face +Y, et par $\mathbf{e}_{i[-Y]}$ (i = 1, 2, 3) pour le bras de propulsion 21 fixé sur la face -Y. Il est à noter que les espaces d'isolation de panne $\mathbf{e}_{i[+Y]}$ (i = 1, 2, 3) sont différents des espaces d'isolation de panne $\mathbf{e}_{i[-Y]}$ (i = 1, 2, 3), de sorte qu'il est possible de distinguer les pannes d'articulation sur le bras de propulsion 20 de celles sur le bras de propulsion 21.

Il est à noter que les espaces d'isolation de panne $\mathbf{e}_i$ ne dépendent que de la fonction de formation de couple B et de l'état de référence $S_0$ considéré. Par conséquent, lesdits espaces d'isolation de panne $\mathbf{e}_i$ peuvent être calculés a priori, et mémorisés dans les moyens de mémorisation du dispositif 40 de détection de panne, pour être utilisés ultérieurement.

Tel qu'indiqué précédemment, le procédé 50 de détection de panne comporte une étape 52 d'estimation de la vitesse de rotation du satellite 10 au cours de l'opération de contrôle. La vitesse de rotation du satellite 10 est par exemple estimée en fonction de mesures fournies par des gyroscopes, ou tout autre capteur adapté à fournir une grandeur représentative de ladite vitesse de rotation dudit satellite 10.

De manière connue, la vitesse de rotation du satellite 10 sur lui-même permet d'estimer le moment cinétique réel $\mathbf{H_R}$ du satellite 10, qui est par exemple donné par l'expression suivante :

$$\mathbf{H_R} = \mathbf{J}\boldsymbol{\omega}$$

expression dans laquelle $\mathbf{J}$ correspond à la matrice d'inertie du satellite 10, et $\omega$ correspond à la vitesse de rotation dudit satellite 10.

Il est également possible d'estimer, de manière conventionnelle, les différents couples théoriquement formés par les différents actionneurs du satellite 10 (bras de propulsion, roues de réaction, etc.). A partir de ces couples théoriquement formés, il est possible d'estimer un moment cinétique théorique $\mathbf{H_T}$ que devrait avoir ledit satellite 10 en l'absence de panne sur les bras de propulsion 20, 21. Le moment cinétique théorique $\mathbf{H_T}$ est par exemple estimé selon l'expression suivante en repère non inertiel :

$$\mathbf{H_T} = \int \left(\mathbf{T_0} + \mathbf{T_C} + \mathbf{T_{RW}} - \boldsymbol{\omega} \otimes \left(\mathbf{H_{RW}} + \mathbf{H_R}\right)\right)\mathrm{d}t$$

expression dans laquelle :

- $\mathbf{T_{RW}}$ correspond au couple formé par les roues de réaction,
- $\mathbf{H_{RW}}$ correspond au moment cinétique des roues de réaction.

Il est également possible de prendre en compte, s'ils peuvent être estimés, les couples perturbateurs $\mathbf{T_{PERT}}$ subis par ledit satellite 10. Le cas échéant, le moment cinétique théorique $\mathbf{H_T}$ que devrait avoir ledit satellite 10 en l'absence de panne sur les bras de propulsion 20, 21 est par exemple estimé selon l'expression suivante en repère non inertiel :

$$\mathbf{H_T} = \int \left(\mathbf{T_0} + \mathbf{T_C} + \mathbf{T_{RW}} + \mathbf{T_{PERT}} - \boldsymbol{\omega} \otimes \left(\mathbf{H_{RW}} + \mathbf{H_R}\right)\right)\mathrm{d}t$$

On peut alors estimer, au cours de l'étape 53, un résidu de moment cinétique $\Delta\mathbf{H}$ qui correspond à la différence entre le moment cinétique réel $\mathbf{H_R}$ dudit engin spatial et le moment cinétique théorique $\mathbf{H_T}$, qui correspond alors au moment cinétique induit par le couple perturbateur $\Delta \mathbf{T}$ :

$$\Delta \mathbf{H} = \mathbf{H_R} - \mathbf{H_T} = \int \Delta \mathbf{T} dt$$

Au cours de l'étape 54, on calcule, pour chaque bras de propulsion 20, 21, des résidus articulaires $r\theta_i$ (i = 1, 2, 3) en projetant le résidu de moment cinétique $\Delta \mathbf{H}$ sur chaque espace d'isolation de panne $\mathbf{e_i}$.

Dans des modes préférés de mise en oeuvre, le résidu articulaire $r\theta_i$ est en outre filtré au moyen d'un filtre pseudo-dérivateur, ce qui revient approximativement à estimer le couple perturbateur $\Delta \mathbf{T}$ en dérivant le résidu de moment cinétique $\Delta \mathbf{H}$ et à projeter ledit couple perturbateur $\Delta \mathbf{T}$ sur l'espace d'isolation de panne $\mathbf{e_i}$. Le cas échéant, le résidu articulaire $r\theta_i$ est par exemple calculé selon l'expression suivante :

$$r\theta_i = D_\theta(s)\mathbf{e_i}^T \Delta \mathbf{H}$$

expression dans laquelle $D_\theta(s)$ correspond à un filtre pseudo-dérivateur, et s correspond à la variable de Laplace.

Les résidus articulaires $r\theta_i$ sont calculés pour chaque articulation 22 (position angulaire $\theta_1$), 23 (position angulaire $\theta_2$), 24 (position angulaire $\theta_3$) de chaque bras de propulsion 20, 21. On obtient ainsi, dans le cas de deux bras de propulsion 20, 21 comportant chacun trois articulations 22, 23, 24, un total de six résidus articulaires, désignés par exemple par $r\theta_{i[+Y]}$ (i = 1, 2, 3) pour le bras de propulsion 20 fixé sur la face +Y, et par $r\theta_{i[-Y]}$ (i = 1, 2, 3) pour le bras de propulsion 21 fixé sur la face -Y.

Ensuite, le procédé 50 de détection de panne comporte une étape 55 de recherche d'une panne d'articulation en fonction des résidus articulaires $r\theta_i$, une panne d'articulation étant détectée si lesdits résidus articulaires vérifient un critère prédéfini de détection de panne d'articulation.

Tel qu'indiqué précédemment, les espaces d'isolation de panne $\mathbf{e_i}$ sont tels que seule une erreur $\Delta\theta_i$ sur la position angulaire $\theta_i$ est susceptible de former un couple perturbateur selon le vecteur $\mathbf{e_i}$. En outre une erreur $\Delta\theta_i$ sur la position angulaire $\theta_i$ ne forme en principe pas de couple perturbateur suivant les espaces d'isolation de panne $\mathbf{e_j}$ et $\mathbf{e_k}$ (i ≠ j ≠ k).

Par conséquent, en cas d'erreur $\Delta\theta_i$ sur la position angulaire $\theta_i$ induite par une panne de l'articulation associée, le résidu articulaire $r\theta_i$ sera en principe très supérieur, en valeur absolue, aux résidus articulaires $r\theta_j$ et $r\theta_k$ (i ≠ j ≠ k). Ainsi, le critère de détection de panne d'articulation peut par exemple être considéré comme vérifié lorsque le résidu articulaire $r\theta_i$ est au moins cinq fois supérieur, en valeur absolue, à chacun des résidus articulaires $r\theta_j$ et $r\theta_k$ (i ≠ j ≠ k). Par exemple, une panne de l'articulation associée à la position angulaire $\theta_i$ est détectée si le résidu articulaire $r\theta_i$ vérifie les deux conditions suivantes :

$$\begin{cases} |r\theta_i| > T_\theta \\ |r\theta_i| > K_\theta \max(|r\theta_j|, |r\theta_k|) \end{cases}$$

expression dans laquelle i ≠ j ≠ k et $T_\theta$ et $K_\theta$ sont des valeurs seuil positives prédéfinies.

Tel qu'indiqué précédemment, les espaces d'isolation de panne $\mathbf{e_{i[+Y]}}$ (i = 1, 2, 3) sont différents des espaces d'isolation de panne $\mathbf{e_{i[-Y]}}$ (i = 1, 2, 3). Par conséquent, en cas de panne d'une articulation du bras de propulsion 20 fixé sur la face +Y, alors le critère de détection de panne articulaire sera vérifié par les résidus articulaires $r\theta_{i[+Y]}$ (i = 1, 2, 3), mais ne sera pas vérifié par les résidus articulaires $r\theta_{i[-Y]}$ (i = 1, 2, 3) calculés pour le bras de propulsion 21 fixé sur la face -Y du corps 11 du satellite 10.

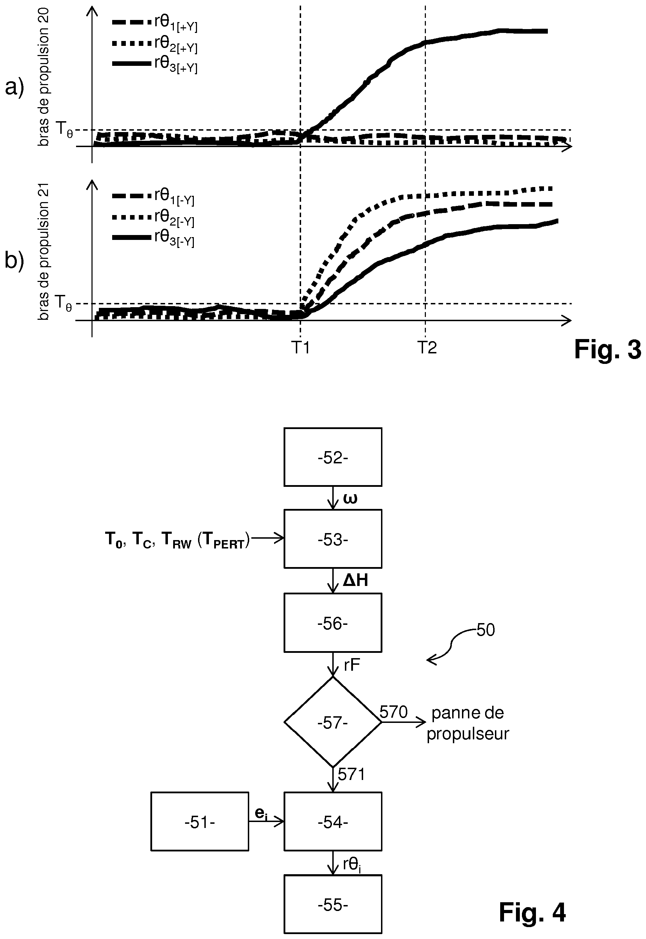

La figure 3 représente schématiquement des résidus articulaires obtenus par simulation.

Plus particulièrement, la partie a) de la figure 3 représente les résidus articulaires $r\theta_{i[+Y]}$ (i = 1, 2, 3) calculés pour les différentes articulations 22, 23, 24 du bras de propulsion 20 fixé sur la face +Y. La partie b) de la figure 3 représente les résidus articulaires $r\theta_{i[-Y]}$ (i = 1, 2, 3) calculés pour les différentes articulations 22, 23, 24 du bras de propulsion 21 fixé sur la face -Y.

Dans l'exemple illustré par la figure 3, une panne de l'articulation 24 (position angulaire $\theta_3$) du bras de propulsion 20 fixé sur la face +Y du satellite 10 intervient à un instant T1.

Tel qu'illustré par les parties a) et b) les résidus articulaires $r\theta_{i[+Y]}$ et $r\theta_{i[-Y]}$ (i = 1, 2, 3) sont tous inférieurs à la valeur seuil $T_\theta$ avant l'instant T1.

Tel qu'illustré par la partie a) de la figure 3, à partir de l'instant T1, le résidu articulaire $r\theta_{3[+Y]}$ augmente progressivement en valeur absolue à cause de la panne de l'articulation 24 (position angulaire $\theta_3$), et dépasse la valeur seuil $T_\theta$. Les résidus articulaires $r\theta_{1[+Y]}$ et $r\theta_{2[+Y]}$ restent eux inférieurs à la valeur seuil $T_\theta$, du fait que l'erreur $\Delta\theta_3$ ne

produit pas de couple perturbateur dans les espaces d'isolation de panne $e_{1[+Y]}$ et $e_{2[+Y]}$. En outre, le résidu articulaire $r\theta_{3[+Y]}$ vérifie le critère de détection de panne à partir d'un instant T2, de sorte qu'une panne articulaire est détectée sur l'articulation 24 (position angulaire $\theta_3$) du bras de propulsion 20 fixé sur la face +Y.

Tel qu'illustré par la partie b), à partir de l'instant T1, les résidus articulaires $r\theta_{i[-Y]}$ (i = 1, 2, 3) augmentent tous progressivement, du fait de l'augmentation du résidu de moment cinétique $\Delta H$ et du fait que les espaces d'isolation de panne $e_{i[-Y]}$ (i = 1, 2, 3), calculés pour le bras de propulsion 21 fixé sur la face -Y, ne présentent pas de propriétés particulières par rapport aux couples perturbateurs formés par une panne d'articulation du bras de propulsion 20 fixé sur la face +Y.

On constate donc, à la lecture de la figure 3, que les résidus articulaires $r\theta_{i[+Y]}$ et $r\theta_{i[-Y]}$ (i = 1, 2, 3) permettent bien de détecter et d'isoler les pannes des articulations 22, 23, 24 des bras de propulsion 20, 21.

En outre, il est à noter que les résidus articulaires $r\theta_i$ (i = 1, 2, 3) peuvent également être utilisés pour estimer l'erreur $\Delta\theta_i$ induite par une panne. Par exemple, si le résidu articulaire $r\theta_i$ vérifie le critère de détection de panne articulaire, alors l'erreur $\Delta\theta_i$ peut être estimée selon l'expression suivante :

$$\Delta\theta_i = \frac{r\theta_i}{IS(\theta_{0,i})}$$

La figure 4 représente schématiquement les principales étapes d'un mode préféré de mise en oeuvre du procédé 50 de détection de panne. Outre les étapes décrites précédemment en référence à la figure 2, le procédé 50 de détection de la figure 4 comporte en outre des étapes de :

- 56 calcul d'un résidu de propulsion rF pour chaque propulseur 30, 31, en fonction de la norme du résidu de moment cinétique $\Delta H$,
- 57 recherche d'une panne de propulseur en fonction du résidu rF de propulsion, une panne de propulseur étant détectée si le résidu de propulsion rF vérifie un critère prédéfini de détection de panne de propulseur.

Au cours de l'étape 56, on calcule des résidus de propulsion rF associés respectivement aux propulseurs 30, 31. Dans des modes préférés de mise en oeuvre, le résidu de propulsion rF est filtré au moyen d'un filtre dérivateur, et est par exemple calculé selon l'expression suivante :

$$rF = D_F(s)\|\Delta H\|$$

expression dans laquelle $D_F(s)$ correspond à un filtre pseudo-dérivateur, et s correspond à la variable de Laplace.

En pratique, une panne de propulseur 30, 31 entrainera généralement un résidu de moment cinétique $\Delta H$ important. En outre, une panne de propulseur 30, 31 n'agit que sur la norme du résidu de moment cinétique $\Delta H$ et n'agit pas sur la direction dudit résidu de moment cinétique $\Delta H$. Par conséquent, le critère de détection de panne de propulseur est par exemple considéré comme étant vérifié lorsque le résidu de propulsion rF est supérieur, en valeur absolue, à une valeur seuil $T_F$ positive prédéfinie.

Il est à noter que, dans le cas illustré par la figure 1 où le satellite 10 comporte deux bras de propulsion 20, 21 comportant chacun un propulseur 30, 31, la norme du résidu de moment cinétique $\Delta H$ ne suffit pas à identifier le propulseur 30, 31 qui est en panne. Par contre, le signe du résidu de moment cinétique $\Delta H$ permet d'identifier le propulseur 30, 31 en panne.

En outre, il est à noter que le résidu de propulsion rF peut également être utilisé pour estimer l'erreur $\Delta F$ induite par une panne. Par exemple, si le résidu de propulsion rF vérifie le critère de détection de panne de propulsion, alors l'erreur $\Delta F$ peut être estimée selon l'expression suivante :

$$\Delta F = \frac{rF}{\left\| \left[ \frac{\delta B}{\delta F} \right]_{s_0} \right\|}$$

Dans des modes particuliers de mise en oeuvre, et tel qu'illustré par la figure 4, la recherche de panne d'articulation n'est effectuée que si aucune panne de propulseur n'est détectée. En effet, tel qu'illustré par la figure 4, lorsqu'une panne de propulseur est détectée (référence 570 sur la figure 4), l'exécution du procédé 50 de détection de panne s'arrête. Par contre, si aucune panne de propulseur n'est détectée (référence 571 sur la figure 4) alors l'exécution du procédé 50 de détection de panne se poursuit avec l'étape 54 de calcul des résidus articulaires $r_{\theta_i}$ (i = 1, 2, 3). Ainsi, il est possible d'isoler les pannes de propulseur 30, 31 et les pannes d'articulations 22, 23, 24.

Rien n'exclut cependant, suivant d'autres exemples, de poursuivre l'exécution du procédé 50 de détection de panne lorsqu'une panne de propulseur est détectée. Par exemple, il est également possible d'estimer l'erreur $\Delta F$ induite par cette panne et de prendre en compte cette erreur $\Delta F$ pour le calcul des résidus articulaires et la recherche de panne d'articulation.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant un satellite 10 comportant deux bras de propulsion 20, 21. Toutefois, l'invention est applicable pour tout satellite comportant au moins un bras de propulsion.

En outre, l'invention a été décrite en considérant le cas d'une opération de contrôle effectuée au cours d'une phase de transfert, en l'occurrence une manoeuvre d'apogée. Rien n'exclut cependant de considérer d'autres types d'opération de contrôle, y compris au cours d'une phase de maintien à poste du satellite 10 en orbite de mission, dès lors que les coefficients $IS(\theta_{0,i})$ sont non nuls pour l'état de référence considéré.

En outre, l'invention a été décrite en considérant un bras de propulsion comportant trois articulations. Toutefois, l'invention est applicable dès lors que le bras de propulsion comporte au moins une articulation.

Dans le cas où ledit bras de propulsion comporte une seule articulation, l'espace d'isolation de panne est par exemple défini par la dérivée partielle de la fonction de formation de couple par rapport à la position angulaire de cette articulation.

Dans le cas où ledit bras de propulsion comporte deux articulations, les espaces d'isolation de panne correspondent par exemple aux plans orthogonaux aux dérivées partielles $\delta B/\delta\theta_i$ (i = 1, 2). Suivant un autre exemple, l'espace d'isolation de panne $\mathbf{e_i}$ est un vecteur correspondant à la projection de la dérivée partielle $\delta B/\delta\theta_i$ dans le plan orthogonal à la dérivée partielle $\delta B/\delta\theta_k$ avec i ≠ k.

En outre, l'invention est également applicable lorsque le bras de propulsion comporte un nombre d'articulations supérieur à trois. Si le bras de propulsion comporte quatre articulations, alors les espaces d'isolation de panne correspondent par exemple à quatre vecteurs différents. Dans un tel cas, les espaces d'isolation de panne ne peuvent pas être tous orthogonaux entre eux, mais peuvent néanmoins être calculés, en fonction des dérivées partielles, de sorte à maximiser la capacité d'isolation des pannes d'articulations. Par exemple, il est possible de calculer les espaces d'isolation de panne de sorte à limiter, pour chaque articulation, les couples perturbateurs formés dans les espaces d'isolation de panne des autres articulations.

Egalement, l'invention a été décrite en considérant un bras de propulsion comportant un seul propulseur. Rien n'exclut cependant, suivant d'autres exemples, d'avoir un bras de propulsion comportant au moins deux propulseur, par exemple à des fins de redondance. Les propulseurs d'un même bras de propulsion peuvent en outre être de même type (électrique ou chimique) ou de types différents.

## Revendications

1. Procédé (50) de détection de panne d'un système de contrôle d'attitude et d'orbite d'un engin spatial (10), ledit système comportant au moins un bras de propulsion (20, 21), ledit bras de propulsion comportant au moins un propulseur (30, 31) et au moins une articulation (22, 23, 24), ledit bras de propulsion étant adapté à former un couple qui est relié à un état du bras de propulsion, ledit état du bras de propulsion correspondant à la position angulaire $(\theta_1, \theta_2, \theta_3)$ de ladite articulation et à la norme de la force de poussée dudit propulseur, par une fonction de formation de couple,

   **caractérisé en ce que** ledit procédé comporte :

   - le calcul (51), en fonction du gradient de la fonction de formation de couple calculé pour un état de référence du bras de propulsion pour une opération de contrôle, d'un espace associé à l'articulation du bras de propulsion, dit « espace d'isolation de panne », dans lequel un couple parasite est formé par une panne de ladite articulation,
   - l'estimation (52), au cours de ladite opération de contrôle, d'une vitesse de rotation de l'engin spatial (10),
   - l'estimation (53) d'un résidu de moment cinétique en fonction de la vitesse de rotation dudit engin spatial (10),
   - le calcul (54) d'un résidu articulaire, associé à l'articulation du bras de propulsion, par projection du résidu de moment cinétique sur l'espace d'isolation de panne,
   - la recherche (55) d'une panne d'articulation en fonction du résidu articulaire, une panne d'articulation étant détectée si ledit résidu articulaire vérifie un critère prédéfini de détection de panne d'articulation.

2. Procédé (50) selon la revendication 1, **caractérisé en ce que**, le bras de propulsion (20, 21) comportant au moins deux articulations (22, 23, 24), ledit procédé comporte :

- le calcul (51) d'espaces d'isolation de panne associés respectivement aux différentes articulations du bras de propulsion,
- le calcul (54) de résidus articulaires associés respectivement aux différentes articulations du bras de propulsion,
- la recherche (55) d'une panne d'articulation en fonction desdits résidus articulaires, une panne d'articulation étant détectée si lesdits résidus articulaires vérifient un critère prédéfini de détection de panne d'articulation.

3. Procédé (50) selon la revendication 2, dans lequel le critère de détection de panne d'articulation est vérifié, pour une articulation du bras de propulsion, lorsque le résidu articulaire associé à ladite articulation est au moins cinq fois supérieur, en valeur absolue, au résidu articulaire associé à chaque autre articulation du bras de propulsion.

4. Procédé (50) selon l'une des revendications précédentes, comportant le calcul (56) d'un résidu de propulsion, associé au propulseur, en fonction de la norme du résidu de moment cinétique, et la recherche (57) d'une panne de propulseur en fonction du résidu de propulsion, une panne de propulseur étant détectée si le résidu de propulsion vérifie un critère prédéfini de détection de panne de propulseur.

5. Procédé (50) selon la revendication 4, dans lequel la recherche (55) de panne d'articulation n'est effectuée que si aucune panne de propulseur n'est détectée.

6. Procédé (50) selon l'une des revendications 4 à 5, dans lequel le critère de détection de panne de propulseur est vérifié lorsque le résidu de propulsion est supérieur, en valeur absolue, à une valeur seuil positive prédéfinie.

7. Procédé (50) selon l'une des revendications 4 à 6, comportant, lorsqu'une panne de propulseur est détectée, l'estimation, en fonction du résidu de propulsion, d'une erreur sur la norme de la force de poussée induite par ladite panne de propulseur.

8. Procédé (50) selon l'une des revendications précédentes, dans lequel l'opération de contrôle est une opération d'une phase de mise à poste de l'engin spatial sur une orbite de mission.

9. Procédé (50) selon l'une des revendications précédentes, comportant, lorsqu'une panne d'articulation est détectée, l'estimation, en fonction du résidu articulaire associé à ladite articulation pour laquelle une panne a été détectée, d'une erreur sur la position angulaire de ladite articulation induite par ladite panne d'articulation.

10. Produit programme d'ordinateur **caractérisé en ce qu'**il comporte un ensemble d'instructions de code de programme qui, lorsqu'elles sont exécutées par un processeur, configurent ledit processeur pour mettre en oeuvre un procédé (50) de détection de panne selon l'une des revendications précédentes.

11. Dispositif (40) de détection de panne d'un système de contrôle d'attitude et d'orbite d'un engin spatial, ledit système comportant au moins un bras de propulsion (20, 21), ledit bras de propulsion comportant au moins un propulseur (30, 31) et au moins une articulation (22, 23, 24), ledit bras de propulsion étant adapté à former un couple qui est relié à un état du bras de propulsion, ledit état du bras de propulsion correspondant à la position angulaire ($\theta_1$, $\theta_2$, $\theta_3$) de ladite articulation et à la norme de la force de poussée dudit propulseur, par une fonction de formation de couple, **caractérisé en ce que** ledit dispositif (40) comporte :

- des moyens configurés pour calculer, en fonction du gradient de la fonction de formation de couple calculé pour un état de référence du bras de propulsion pour une opération de contrôle, un espace associé à l'articulation du bras de propulsion, dit « espace d'isolation de panne », dans lequel un couple parasite est formé par une panne de ladite articulation,
- des moyens configurés pour estimer, au cours de ladite opération de contrôle, une vitesse de rotation de l'engin spatial (10),
- des moyens configurés pour estimer un résidu de moment cinétique en fonction de la vitesse de rotation dudit engin spatial,
- des moyens configurés pour calculer un résidu articulaire, associé à l'articulation du bras de propulsion, par projection du résidu de moment cinétique sur l'espace d'isolation de panne,
- des moyens configurés pour rechercher une panne d'articulation en fonction du résidu articulaire, une panne d'articulation étant détectée si ledit résidu articulaire vérifie un critère prédéfini de détection de panne d'articulation.

12. Système de contrôle d'attitude et d'orbite d'un engin spatial (10), tel qu'un satellite, comportant au moins un bras de propulsion (20, 21) de l'engin spatial, ledit bras de propulsion comportant au moins un propulseur (30, 31) et au moins une articulation, **caractérisé en ce qu'**il comporte un dispositif (40) de détection de panne selon la revendication 11.

**13.** Système selon la revendication 12, dans lequel le propulseur (30, 31) est un propulseur électrique.

**14.** Système selon l'une des revendications 12 à 13, dans lequel le bras de propulsion (20, 21) comporte au moins deux propulseurs.

**15.** Système selon l'une des revendications 12 à 14, comportant au moins deux bras de propulsion (20, 21).


**Patentansprüche**

**1.** Verfahren (50) zur Erkennung, über eine Drehmomentbildungsfunktion, eines Ausfalls eines Systems zur Steuerung der Lage und der Umlaufbahn eines Raumflugkörpers (10), wobei das System mindestens einen Antriebsarm (20, 21) umfasst, wobei der Antriebsarm mindestens ein Antriebswerk (30, 31) und mindestens ein Gelenk (22, 23, 24) umfasst, wobei der Antriebsarm dazu geeignet ist, ein Drehmoment zu bilden, das mit einem Zustand des Antriebsarms verbunden ist, wobei der Zustand des Antriebsarms der Winkelstellung ($\theta_1$, $\theta_2$, $\theta_3$) des Gelenks und der Norm der Schubkraft des Antriebswerks entspricht, **dadurch gekennzeichnet, dass** das Verfahren umfasst:

- Berechnen (51), in Abhängigkeit vom Gradienten der Drehmomentbildungsfunktion, der für einen Referenzzustand des Antriebsarms für einen Steuervorgang berechnet wurde, eines Raums, der dem Gelenk des Antriebsarms zugeordnet ist, "Ausfallisolationsraum" genannt, in dem durch einen Ausfall des Gelenks ein parasitäres Drehmoment gebildet wird,
- Schätzen (52), im Laufe des Steuervorgangs, einer Drehgeschwindigkeit des Raumflugkörpers (10),
- Schätzen (53) eines kinetischen Restmoments in Abhängigkeit von der Drehgeschwindigkeit des Raumflugkörpers (10),
- Berechnen (54) eines Gelenkrests, der dem Gelenk des Antriebsarms zugeordnet ist, durch Projektion des kinetischen Restmoments auf den Ausfallisolationsraum,
- Suchen (55) eines Gelenkausfalls in Abhängigkeit vom Gelenkrest, wobei ein Gelenkausfall erkannt wird, wenn der Gelenkrest ein vordefiniertes Gelenkausfall-Erkennungskriterium verifiziert.

**2.** Verfahren (50) nach Anspruch 1, **dadurch gekennzeichnet, dass**, wenn der Antriebsarm (20, 21) mindestens zwei Gelenke (22, 23, 24) umfasst, das Verfahren umfasst:

- Berechnen (51) von Ausfallisolationsräumen, die jeweils den verschiedenen Gelenken des Antriebsarms zugeordnet sind,
- Berechnen (54) von Gelenkresten, die jeweils den verschiedenen Gelenken des Antriebsarms zugeordnet sind,
- Suchen (55) eines Gelenkausfalls in Abhängigkeit von den Gelenkresten, wobei ein Gelenkausfall erkannt wird, wenn die Gelenkreste ein vordefiniertes Gelenkausfall-Erkennungskriterium verifizieren.

**3.** Verfahren (50) nach Anspruch 2, wobei das Gelenkausfall-Erkennungskriterium für ein Gelenk des Antriebsarms verifiziert wird, wenn der Gelenkrest, der dem Gelenk zugeordnet ist, im Absolutwert mindestens fünfmal größer ist als der Gelenkrest, der jedem anderen Gelenk des Antriebsarms zugeordnet ist.

**4.** Verfahren (50) nach einem der vorstehenden Ansprüche, umfassend das Berechnen (56) eines dem Antriebswerk zugeordneten Antriebsrests in Abhängigkeit von der Norm des kinetischen Restmoments, und das Suchen (57) eines Antriebswerksausfalls in Abhängigkeit vom Antriebsrest, wobei ein Antriebswerksausfall erkannt wird, wenn der Antriebsrest ein vordefiniertes Antriebswerksausfall-Erkennungskriterium verifiziert.

**5.** Verfahren (50) nach Anspruch 4, wobei das Suchen (55) eines Gelenkausfalls nur dann erfolgt, wenn kein Antriebswerksausfall erkannt wird.

**6.** Verfahren (50) nach einem der Ansprüche 4 bis 5, wobei das Antriebswerksausfall-Erkennungskriterium verifiziert wird, wenn der Antriebsrest im Absolutwert größer als ein vordefinierter positiver Schwellenwert ist.

**7.** Verfahren (50) nach einem der Ansprüche 4 bis 6, umfassend, wenn ein Antriebswerksausfall erkannt wird, das Schätzen, in Abhängigkeit vom Antriebsrest, eines Fehlers über der Norm der Schubkraft, der vom Antriebswerksausfall hervorgerufen wird.

8. Verfahren (50) nach einem der vorstehenden Ansprüche, wobei der Steuervorgang ein Vorgang einer Phase zum Instellungbringen des Raumflugkörpers auf einer Einsatzumlaufbahn ist.

9. Verfahren (50) nach einem der vorstehenden Ansprüche, umfassend, wenn ein Gelenkausfall erkannt wird, das Schätzen, in Abhängigkeit vom Gelenkrest, welcher dem Gelenk zugeordnet ist, für das ein Ausfall erkannt wurde, eines Fehlers über der Winkelstellung des Gelenks, der vom Gelenkausfall hervorgerufen wird.

10. Computerprogrammprodukt, **dadurch gekennzeichnet, dass** es einen Satz von Programmcodeanweisungen umfasst, die, wenn sie von einem Prozessor ausgeführt werden, den Prozessor so konfigurieren, dass er ein Ausfallerkennungsverfahren (50) nach einem der vorstehenden Ansprüche umsetzt.

11. Vorrichtung (40) zur Erkennung, über eine Drehmomentbildungsfunktion, eines Ausfalls eines Systems zur Steuerung der Lage und der Umlaufbahn eines Raumflugkörpers, wobei das System mindestens einen Antriebsarm (20, 21) umfasst, wobei der Antriebsarm mindestens ein Antriebswerk (30, 31) und mindestens ein Gelenk (22, 23, 24) umfasst, wobei der Antriebsarm dazu geeignet ist, ein Drehmoment zu bilden, das mit einem Zustand des Antriebsarms verbunden ist, wobei der Zustand des Antriebsarms der Winkelstellung ($\theta_1$, $\theta_2$, $\theta_3$) des Gelenks und der Norm der Schubkraft des Antriebswerks entspricht, **dadurch gekennzeichnet, dass** die Vorrichtung (40) umfasst:

- Mittel, die dafür konfiguriert sind, in Abhängigkeit vom Gradienten der Drehmomentbildungsfunktion, der für einen Referenzzustand des Antriebsarms für einen Steuervorgang berechnet wurde, einen Raum zu berechnen, der dem Gelenk des Antriebsarms zugeordnet ist, "Ausfallisolationsraum" genannt, in dem durch einen Ausfall des Gelenks ein parasitäres Drehmoment gebildet wird,
- Mittel, die dafür konfiguriert sind, im Laufe des Steuervorgangs eine Drehgeschwindigkeit des Raumflugkörpers (10) zu schätzen,
- Mittel, die dafür konfiguriert sind, ein kinetisches Restmoment in Abhängigkeit von der Drehgeschwindigkeit des Raumflugkörpers zu schätzen,
- Mittel, die dafür konfiguriert sind, einen Gelenkrest, der dem Gelenk des Antriebsarms zugeordnet ist, durch Projektion des kinetischen Restmoments auf den Ausfallisolationsraum zu berechnen,
- Mittel, die dafür konfiguriert sind, einen Gelenkausfall in Abhängigkeit vom Gelenkrest zu suchen, wobei ein Gelenkausfall erkannt wird, wenn der Gelenkrest ein vordefiniertes Gelenkausfall-Erkennungskriterium verifiziert.

12. System zur Steuerung der Lage und der Umlaufbahn eines Raumflugkörpers (10), wie etwa eines Satelliten, das mindestens einen Antriebsarm (20, 21) des Raumflugkörpers umfasst, wobei der Antriebsarm mindestens ein Antriebswerk (30, 31) und mindestens ein Gelenk umfasst, **dadurch gekennzeichnet, dass** es eine Ausfallerkennungsvorrichtung (40) nach Anspruch 11 umfasst.

13. System nach Anspruch 12, wobei das Antriebswerk (30, 31) ein elektrisches Antriebswerk ist.

14. System nach einem der Ansprüche 12 bis 13, wobei der Antriebsarm (20, 21) mindestens zwei Antriebswerke umfasst.

15. System nach einem der Ansprüche 12 bis 14, das mindestens zwei Antriebsarme (20, 21) umfasst.

**Claims**

1. Method (50) for detecting a fault of an orbit and attitude control system of a spacecraft (10), said system comprising at least one propulsion arm (20, 21), said propulsion arm comprising at least one thruster (30, 31) and at least one articulation (22, 23, 24), said propulsion arm being adapted to form a torque which is linked to a status of the propulsion arm, said status of the propulsion arm corresponding to the angular position ($\theta_1$, $\theta_2$, $\theta_3$) of said articulation and to the norm of the thrust force of said thruster, by a torque formation function, **characterised in that** said method comprises:

- calculating (51), according to the gradient of the torque formation function calculated for a reference state of the propulsion arm for a control operation, a space associated with the articulation of the propulsion arm, referred to as "fault isolation space", wherein a parasitic torque is formed by a fault of said articulation,
- estimating (52), during said control operation, a rotation speed of the spacecraft (10),
- estimating (53) a kinetic moment residue according to the rotation speed of said spacecraft (10),
- calculating (54) an articulation residue, associated with the articulation of the propulsion arm, by projecting the kinetic moment residue onto the fault isolation space,
- searching (55) for an articulation fault according to the articulation residue, an articulation fault being detected if said articulation residue satisfies a predefined articulation fault detection criterion.

2.  Method (50) according to claim 1, **characterised in that**, the propulsion arm (20, 21) comprising at least two articulations (22, 23, 24), said method comprises:

    - calculating (51) fault isolation spaces associated respectively with the various articulations of the propulsion arm,
    - calculating (54) articulation residues associated respectively with the various articulations of the propulsion arm,
    - searching (55) for an articulation fault according to said articulation residues, an articulation fault being detected if said articulation residues satisfy a predefined articulation fault detection criterion.

3.  Method (50) according to claim 2, wherein the articulation fault detection criterion is satisfied, for an articulation of the propulsion arm, when the articulation residue associated with said articulation is at least five times greater, in absolute value, than the articulation residue associated with each other articulation of the propulsion arm.

4.  Method (50) according to one of the preceding claims, comprising the calculating (56) of a propulsion residue, associated with the thruster, according to the norm of the kinetic moment residue, and the searching (57) of a thruster fault according to the thruster residue, a thruster fault being detected if the thruster residue satisfies a predefined thruster fault detection criterion.

5.  Method (50) according to claim 4, wherein the searching (55) for an articulation fault is carried out only if no thruster fault is detected.

6.  Method (50) according to one of claims 4 to 5, wherein the thruster fault detection criterion is satisfied when the propulsion residue is greater, in absolute value, than a predefined positive threshold value.

7.  Method (50) according to one of claims 4 to 6, comprising, when a thruster fault is detected, the estimating, according to the propulsion residue, an error on the norm of the thrust force induced by said thruster fault.

8.  Method (50) according to one of the preceding claims, wherein the control operation is an operation of a positioning phase of the spacecraft on a mission orbit.

9.  Method (50) according to one of the preceding claims, comprising, when an articulation fault is detected, the estimating, according to the articulation residue associated with said articulation for which a fault has been detected, an error on the angular position of said articulation induced by said articulation fault.

10. Computer program product **characterised in that** it comprises a set of program code instructions that, when they are executed by a processor, configure said processor to implement a method (50) for detecting a fault according to one of the preceding claims.

11. Device (40) for detecting a fault of an orbit and attitude control system of a spacecraft, said system comprising at least one propulsion arm (20, 21), said propulsion arm comprising at least one thruster (30, 31) and at least one articulation (22, 23, 24), said propulsion arm being adapted to form a torque which is linked to a status of the propulsion arm, said status of the propulsion arm corresponding to the angular position ($\theta_1$, $\theta_2$, $\theta_3$) of said articulation and to the norm of the thrust force of said thruster, by a torque formation function, **characterised in that** said device (40) comprises:

    - means configured to calculate, according to the gradient of the torque formation function calculated for a reference state of the propulsion arm for a control operation, a space associated with the articulation of the propulsion arm, referred to as "fault isolation space", wherein a parasitic torque is formed by a fault of said articulation,

- means configured to estimate, during said control operation, a rotation speed of the spacecraft (10),
- means configured to estimate a kinetic moment residue according to the rotation speed of said spacecraft,
- means configured to calculate an articulation residue, associated with the articulation of the propulsion arm, by projecting the kinetic moment residue onto the fault isolation space,
- means configured to search for an articulation fault according to the articulation residue, an articulation fault being detected if said articulation residue satisfies a predefined articulation fault detection criterion.

12. Orbit and attitude control system of a spacecraft (10), such as a satellite, comprising at least one propulsion arm (20, 21) of the spacecraft, said propulsion arm comprising at least one thruster (30, 31) and at least one articulation, **characterised in that** it comprises a device (40) for detecting a fault according to claim 11.

13. System according to claim 12, wherein the thruster (30, 31) is an electric thruster.

14. System according to one of claims 12 to 13, wherein the propulsion arm (20, 21) comprises at least two thrusters.

15. System according to one of claims 12 to 14, comprising at least two propulsion arms (20, 21).

**Fig. 1**

**Fig. 2**

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2660154 A2